# EUROPEAN PATENT APPLICATION

(11) **EP 3 889 857 A1**
(43) Date of publication of application: **06.10.2021**
(21) Application number: 19890152.2
(22) Date of filing: 06.11.2019
(51) Int. Cl.: G06Q 10/06, G06Q 50/06

(54) **INFORMATION PROCESSING DEVICE, INFORMATION PROCESSING METHOD, AND PROGRAM**

(30) Priority: 28.11.2018 JP 2018222725
(71) Applicant: Kyocera Corporation, Kyoto-shi, Kyoto 612-8501 (JP)
(72) Inventor: UTAMARU Tsudoi, Kyoto-shi, Kyoto 612-8501 (JP); KITAJI, Mitsuhiro, Kyoto-shi, Kyoto 612-8501 (JP)
(74) Representative: TBK
(86) International application number: PCT/JP2019/043421
(87) International publication number: WO 2020/110633

(57) **Abstract**

An information processing apparatus includes a controller configured to calculate an economic benefit resulting from energy saving attributed to a power generation apparatus and/or a power storage apparatus, based on first information regarding electric power supplied from the power generation apparatus and/or the power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus, and also calculate a period to be taken by the economic benefit to recover the cost of the power generation apparatus and/or the power storage apparatus. The controller is configured to output, based on an input of a predetermined period, information regarding a configuration of the power generation apparatus and/or the storage battery that can be realized by the cost to be recovered by the economic benefit in the predetermined period.

## Description

### CROSS REFERENCE TO RELATED APPLICATION

This application claims priority to and the benefit of Japanese Patent Application No. 2018-222725 filed on November 28, 2018, the entire contents of which are incorporated herein by reference.

### TECHNICAL FIELD

The present disclosure relates to an information processing apparatus, an information processing method, and a program.

### BACKGROUND

In recent years, distributed power sources such as solar cells, fuel cells, and storage batteries are popularly used. Attempts for efficient power use by appropriately introducing the distributed power sources are made. Due to a recent increase in awareness of energy saving (energy conservation), the efficient power use is desired in ordinary households and also in manufacturing bases and offices that use energy of a certain scale or more. As a technique associated with the efficient power use, PTL 1 set forth below, for example, discloses a system that aggregates and manages energy data of a plurality of bases.

### CITATION LIST

### Patent Literature

PTL 1: JP-2011-192010 A

### SUMMARY

An information processing apparatus according to an embodiment includes:
a controller configured to calculate an economic benefit resulting from energy saving attributed to a power generation apparatus and/or a power storage apparatus, based on first information regarding electric power supplied from the power generation apparatus and/or the power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus, and also calculate a period to be taken by the economic benefit to recover the cost of the power generation apparatus and/or the power storage apparatus.

The controller is configured to output, based on an input of a predetermined period, information regarding a configuration of the power generation apparatus and/or a storage battery that can be realized by the cost to be recovered by the economic benefit in the predetermined period.

An information processing method according to an embodiment includes:
a step of acquiring first information regarding electric power supplied from a power generation apparatus and/or a power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus;
a step of calculating an economic benefit resulting from energy saving attributed to the power generation apparatus and/or the power storage apparatus, based on the first information, the second information, the third information, the information regarding the cost corresponding to the electric power, and the information regarding the cost of the power generation apparatus and/or the power storage apparatus, and also calculating a period to be taken by the economic benefit to recover the cost of the power generation apparatus and/or the power storage apparatus; and
a step of outputting, based on an input of a predetermined period, information regarding a configuration of the power generation apparatus and/or a storage battery that can be realized by the cost to be recovered by the economic benefit in the predetermined period.

A program according to an embodiment is configured to cause a computer to perform:
a step of acquiring first information regarding electric power supplied from a power generation apparatus and/or a power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus;
a step of calculating an economic benefit resulting from energy saving attributed to the power generation apparatus and/or the power storage apparatus, based on the first information, the second information, the third information, the information regarding the cost corresponding to the electric power, and the information regarding the cost of the power generation apparatus and/or the power storage apparatus, and also calculating a period to be taken by the economic benefit to recover the cost of the power generation apparatus and/or the power storage apparatus; and
a step of outputting, based on an input of a predetermined period, information regarding a configuration of the power generation apparatus and/or a storage battery that can be realized by the cost to be recovered by the economic benefit in the predetermined period.

### BRIEF DESCRIPTION OF THE DRAWINGS

In the accompanying drawings:
FIG. 1 is a functional block diagram illustrating a schematic configuration of an information processing apparatus according to an embodiment;
FIG. 2 is diagram illustrating a user of the information processing apparatus according to the embodiment;
FIG. 3 is a diagram illustrating an example input screen by the information processing apparatus according to the embodiment;
FIG. 4 is a diagram illustrating example input information by the information processing apparatus according to the embodiment;
FIG. 5 is a diagram illustrating an example output screen by the information processing apparatus according to the embodiment;
FIG. 6 is a diagram illustrating an example output screen by the information processing apparatus according to the embodiment;
FIG. 7 is a diagram illustrating an example input screen by the information processing apparatus according to the embodiment;
FIG. 8 is diagram illustrating an example input screen by the information processing apparatus according to the embodiment;
FIG. 9 is a diagram illustrating an example output screen by the information processing apparatus according to the embodiment;
FIG. 10 is a diagram illustrating an example output screen by the information processing apparatus according to the embodiment;
FIG. 11 is a flowchart illustrating a processing by the information processing apparatus according to the embodiment; and
FIG. 12 is a flowchart illustrating a processing by an information processing apparatus according to another embodiment.

### DETAILED DESCRIPTION

### First Embodiment

When introducing a new distributed power source or changing a configuration of an existing distributed power source, it would be extremely beneficial if effects of doing so could be simulated from various viewpoints. An object of the present disclosure is to provide an information processing apparatus, an information processing method, and a program that contribute to efficient use of electric power. According to an embodiment, an information processing apparatus, an information processing method, and a program that contribute to the efficient use of electric power can be provided. Hereinafter, an information processing apparatus according to a first embodiment will be described with reference to the drawings.

The information processing apparatus according to the embodiment performs predetermined processing, based on information input by a user, information stored in the information processing apparatus, information acquired from the outside of the information processing apparatus, and the like, and outputs a result of the processing. The information processing apparatus according to the embodiment may be, for example, a specially designed terminal. Further, the information processing apparatus according to the embodiment may adopt various configurations such as, for example, a personal computer (PC), a laptop PC, a tablet computer, a smartphone, a gaming terminal, a mobile phone, or the like that has application software installed thereon.

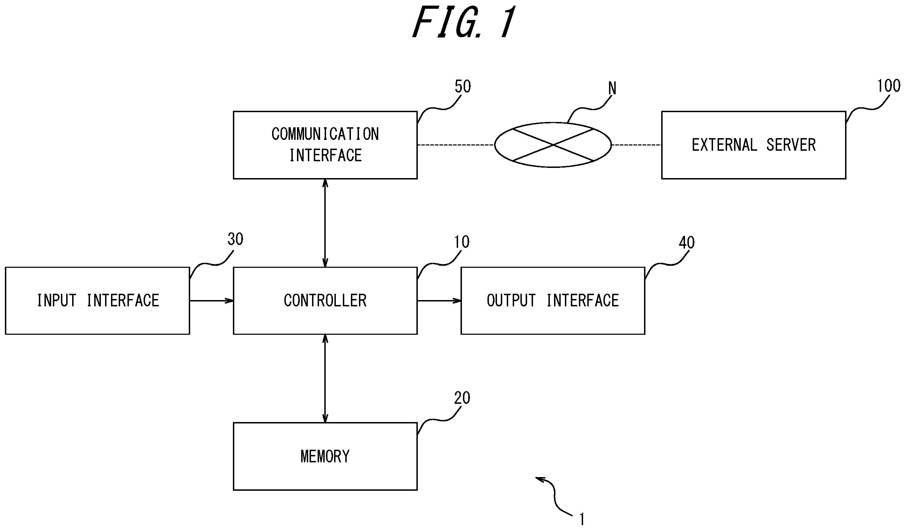

FIG. 1 is a functional block diagram illustrating a schematic configuration of the information processing apparatus according to the embodiment. The information processing apparatus 1 according to the embodiment includes a controller 10, a memory 20, an input interface 30, an output interface 40, and a communication interface 50, as illustrated in FIG. 1. As illustrated in FIG. 1, further, the information processing apparatus 1 according to the embodiment can be connected to an external apparatus such as an external server 100 by a wired or wireless manner via, for example, a network N.

To provide control and a processing ability for executing various functions, the controller 10 may include at least one processor such as, for example, a CPU (Central Processing Unit). The controller 10 may be realized collectively by one processor, by several processors, or by individual processors. The processor may be implemented as an integrated circuit. The integrated circuit is also called an IC (Integrated Circuit). The processor may be implemented as a plurality of communicably connected integrated circuits and discrete circuits. The processor may be implemented based on various other known techniques. In one embodiment, the controller 10 may be configured as, for example, a CPU and a program to be executed by the CPU. The program to be executed by the controller 10, a result of the processing executed by the controller 10, and the like may be stored in the memory 20. An operation of the controller 10 of the information processing apparatus 1 according to the embodiment will be further described later.

The memory 20 stores various information acquired from the controller 10, the communication interface 50, and the like. In one embodiment, the memory 20 may also store information input by a user or the like from the input interface 30. Further, the memory 20 stores a program or the like to be executed by the controller 10. The memory 20 also stores various data such as a result of a calculation performed by the controller 10. Further, the memory 20 may also include a working memory or the like that is used during operation of the controller 10. Although the memory 20 may be configured by, for example, a semiconductor memory, a magnetic disk, or the like, the memory 20 is not limited thereto and may be any storage apparatus. For example, the memory 20 may be a storage medium such as a memory card inserted into the information processing apparatus 1 according to the present embodiment. Alternatively, the memory 20 may be an internal memory of the CPU used as the controller 10.

The input interface 30 detects an input operation by the user. The input interface 30 may be various input apparatus, such as at least one of a dedicated controller, a keyboard, and a mouse. In a case in which the output interface 40 is a display such as a liquid crystal display (LCD), the input interface 30 may detect an input corresponding to a screen displayed on the display. In one embodiment, the input interface 30 can detect a user operation to move a cursor, a pointer, or the like to a location where an object such as an icon is displayed on the display. Further, the input interface 30 can detect an input corresponding to the display of the object or the like, that is, a user input for selecting an object or the like.

Alternatively, the input interface 30 can be a touch panel configured to detect an operation made by a direct contact of a user's finger or the like. In particular, in a case in which the touch panel is formed from a translucent material and arranged on a front surface of the display, a user operation to directly touch an object such as an icon displayed on the display can be detected. Thus, the input interface 30 implemented by the touch panel having the above configuration can provide the user with intuitive operability. Hereinafter, the present embodiment will be described assuming a configuration in which the input interface 30 formed by a transparent touch panel is arranged on the front surface of the display as described above.

As described above, the output interface 40 may be a display such as an LCD or the like. In a case in which the information processing apparatus 1 does not include a display such as the LCD, the output interface 40 may serve as an external output interface.

In a case in which the output interface 40 is configured to be the display, the display may display information indicating a result of information processing performed by the information processing apparatus 1. In this case, the display can be configured by various display apparatuses such as, for example, an LCD or an organic EL display. The display can display various icons depicting objects, in addition to characters, numbers, symbols, and the like. In the present embodiment, further, the display may be configured to display in a single color or in gray scale or may be a display that supports a color display to facilitate understanding by a general user at first glance.

In a case in which the output interface 40 is the external output interface, it may be used as an interface for connecting the information processing apparatus 1 to various display apparatuses such as an LCD or an organic EL display. In a case in which the information processing apparatus 1 is connected to an external display apparatus by a cable, the interface can be a receptacle of a connector for connecting the cable connected to the display apparatus to the information processing apparatus 1. On the other hand, in a case in which the information processing apparatus 1 is wirelessly connected to the display apparatus, the interface can be a wireless unit that configures a transmission and reception unit for transmitting a signal to the display apparatus and receiving a signal from the display apparatus. In these cases, the display apparatus includes an interface corresponding to the interface of the information processing apparatus 1.

The communication interface 50 can realize various functions including wireless communication. The communication interface 50 may realize communication using various communication methods such as, for example, LTE (Long Term Evolution). The communication interface 50 may include a modem having a communication method standardized by, for example, ITU-T (International Telecommunication Union Telecommunication Standardization Sector). Further, the communication interface 50 may realize wireless communication by various methods such as, for example, WiFi or Bluetooth (Bluetooth is a registered trademark in Japan, other countries, or both). The communication interface 50 may wirelessly communicate with, for example, a communication interface of the external server 100 via, for example, an antenna. Various information transmitted and received by the communication interface 50 may be stored in, for example, the memory 20. The communication interface 50 may be configured including, for example, an antenna for transmitting and receiving radio waves, an appropriate RF unit, and the like. Because the communication interface 50 can be configured by a known technique for performing wireless communication, a more detailed description of the hardware will be omitted. Further, the communication interface 50 may wirelessly communicate with, for example, a communication interface of an information processing apparatus other than the external server 100.

The network N is configured by a wired or wireless manner, or any combination of wired and wireless manners. The network N can be any network such as the Internet or an intranet that enables communication between the information processing apparatus 1 and another information processing apparatus such as, for example, the external server 100.

The external server 100 may be any information processing apparatus that can be connected to the information processing apparatus 1 via the network N. For example, the external server 100 may be a database server, an application server, or the like. The external server 100 may be, for example, a cloud server. Also, the external server 100 may communicate with an information processing apparatus other than the information processing apparatus 1. In the present disclosure, the information processing apparatus 1 and the external server 100 may be wirelessly connected to each other. In the present disclosure, for example, at least a part of the external server 100 and the network N may be connected by a wired manner. The network N of the present disclosure may have other configurations.

Through communication between the information processing apparatus 1 and the external server 100, various information regarding the information processing apparatus 1 can be transmitted to the external server 100. Further, the information processing apparatus 1 can receive various information from the external server 100 by communicating therewith. As a result, the information processing apparatus 1 can acquire, for example, information that is not stored in the memory 20 or information that is not input by the user, from the external server 100.

Next, a user who is assumed to use the information processing apparatus 1 according to the embodiment will be described.

The information processing apparatus 1 according to the embodiment may be used by a general household user who is considering introduction or a configuration change of a distributed power source such as a solar cell, a fuel cell, or a storage battery. Alternatively, the information processing apparatus 1 according to the embodiment may be used by a user of a company based in a manufacturing base or an office that uses energy of a certain scale or more. Hereinafter, the user of the information processing apparatus 1 according to the embodiment is assumed to be a company (e.g., a subsidiary company) based in a manufacturing base or an office that uses energy of a certain scale or more, or a company (e.g., a parent company) in a position to supervise the company.

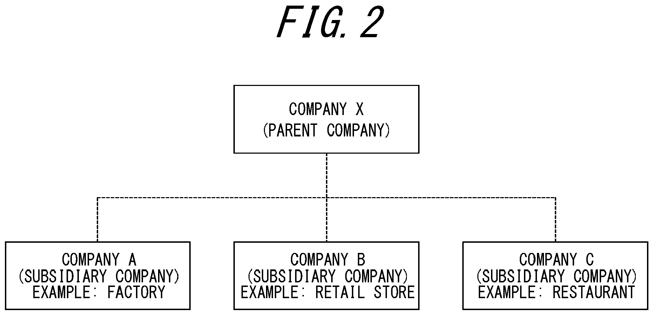

FIG. 2 is a diagram illustrating an example of users of the information processing apparatus 1 according to the embodiment.

As illustrated in FIG. 2 by way of example, it is assumed that each of a company A, a company B, and a company C is a subsidiary company of a parent company X. That is, it is assumed that the parent company X owns the company A, the company B, and the company B, as its subsidiary companies. In this case, although each of the subsidiary companies A, B, and C has the same parent company X, they may be different business entities.

As illustrated in FIG. 2, for example, the company A may have a factory, the company B may have a retail store for selling goods, and the company C may have a restaurant. In this case, the company A, the company B, and the company C may require different amounts of electric power and different revenue and expenditure.

Hereinafter, a case in which the parent company X is a company that supervises the subsidiary companies A, B, and C will be described. The parent company X serving as the supervising company may introduce energy equipment to each of the subsidiary companies for the purpose of achieving an energy saving target of the entire group company. In this case, desired conditions may vary between the companies. Here, examples of the desired conditions include:
(1) Time that allows a continuance of business in the event of an emergency such as a disaster or power outage (hereinafter, also referred to as "Business continuity planning: BCP"); and
(2) A period for a profit from energy saving to recover an investment made to achieve the energy saving target (hereinafter, also referred to as "investment payback period").

When each of the subsidiary companies introduces measures for energy saving, a desired BCP and/or investment payback period may differ between the subsidiary companies. As illustrated in FIG. 2, in particular, in a case in which the subsidiary companies are business entities of different business categories such as a factory, a retail store, and a restaurant, the desired BCP and/or investment payback period may significantly differ therebetween. Thus, the energy saving target for the entire group company determined by the parent company X acting as the supervising company may not be achieved by the group company as a whole. For example, there is a concern that, if the subsidiary companies prioritize respective desired payback periods, the energy saving target of the entire group company may not be achieved. There also is a concern that, if achievement of the energy saving target for the entire group companies is prioritized, the BCP and/or the investment payback period desired by each subsidiary company may not be met.

In view of such circumstances, the information processing apparatus 1 according to the first embodiment enables a simulation of a configuration of a distributed power source that satisfies various conditions from the respective viewpoints of the parent company and the subsidiary companies. This simulation enables recognition of effects of a case in which a distributed power source is newly introduced or a case in which a configuration of an existing distributed power source is changed, from various viewpoints.

In 2018, "Act on Partial Revision of the Act on Rationalizing Energy Use (2018 Act No. 45)" serving as a revised bill of "Act on Rationalizing Energy Use" (so-called "Energy Saving Act") was promulgated. This law stipulates the evaluation of energy saving through corporate collaboration. This law aims to establish a system that acknowledges a plurality of companies addressing energy saving and allows them to report amounts of saved energy by distributing therebetween, such that the companies are appropriately appraised. The Energy Conservation Law prior to the revision appraises an energy consumption efficiency of businesses, based on each company. Under the revised law, a new acknowledgement system for "Collaboration Energy Conservation Plan" has been established, such that a plurality of acknowledged companies can distribute and report an amount of energy saved through collaboration between the companies. Because companies are more appropriately appraised for their energy saving, it is expected that they will actively cooperate with each other to address energy saving.

In such a situation also, it would be extremely useful if the information processing apparatus 1 according to the embodiment can simulate a configuration of a distributed power source that satisfies various conditions from the respective viewpoints of the parent company and the subsidiary company.

Hereinafter, an example of the operation of the information processing apparatus 1 according to the embodiment will be described. The information processing apparatus 1 according to the embodiment outputs a combination of the energy equipment that satisfies conditions of subsidiary companies, taking into consideration their respective prioritized items, based on an input of various conditions of the subsidiary companies. Here, the conditions to be input may be a plurality of conditions including, for example, an overall energy saving target, an individual energy saving target (a primary energy reduction effect), an investment payback period, a CO₂ reduction effect, and a BCP effect.

The overall energy saving target may indicate an energy saving target as a whole including the parent company and the subsidiary companies as illustrated in FIG. 2. The overall energy saving target may indicate the energy saving target as a whole including all the subsidiary companies without including the parent company illustrated in FIG. 2. The overall energy saving target may indicate an energy saving effect as a whole that can be caused by an introduction of the energy equipment. The individual energy saving target (the primary energy reduction effect) may indicate the energy saving target of any one of the subsidiary companies illustrated in FIG. 2. The individual energy saving target (the primary energy reduction effect) may indicate an energy saving effect that can be caused by introducing the energy equipment to the subsidiary companies. The CO₂ reduction effect may indicate an amount of CO₂ expected to be reduced by the introduction of the energy equipment. The BCP effect may indicate a period during which the business is expected to continue by the BCP described above.

Further, the information processing apparatus 1 may be able to specify any one of the above conditions as a prioritized item. The information processing apparatus 1 calculates a combination of the energy equipment that satisfies the conditions, taking into consideration the prioritized item, based on the inputs described above. The information processing apparatus 1 can output a calculation result and present it to the user or the like. The user who is presented with the calculation result by the information processing apparatus 1 can recognize the energy equipment that is capable of achieving the overall energy saving target while satisfying the respective conditions of the subsidiary companies.

Further, the information processing apparatus 1 can calculate a combination of the energy equipment that satisfies the condition of the subsidiary company, for each of the subsidiary companies. When some conditions are changed, the information processing apparatus 1 can present a combination of the energy equipment that achieves the overall energy saving target, according to the changed conditions. That is, when some conditions are changed, the information processing apparatus 1 can present a combination of the energy equipment that achieves the overall energy saving target, including an influence by the changed conditions on others.

Next, an example of an input screen and an output screen of the information processing apparatus 1 according to the embodiment will be described.

In the information processing apparatus 1 according to the embodiment, the controller 10 displays the input screen on the output interface 40. Then, the controller 10 detects a user input using the input interface 30 in a state in which the input screen is displayed on the output interface 40. When the controller 10 detects an input using the input interface 30, the controller 10 performs a predetermined calculation and outputs a result to the output interface 40. Hereinafter, a specific example of this operation will be described with reference to the drawings.

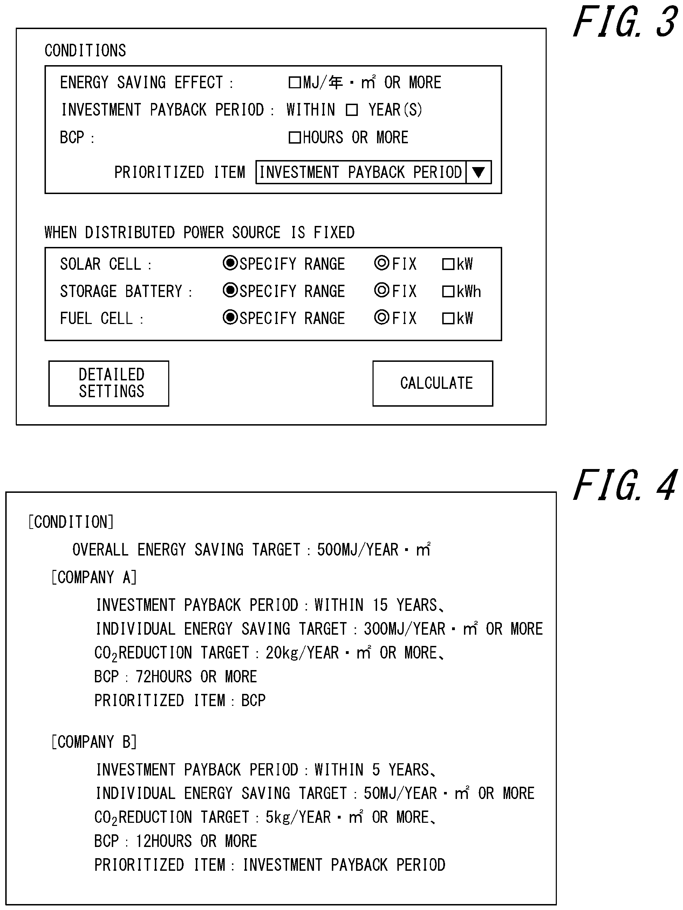

The information processing apparatus 1 according to the embodiment may display, for example, a display screen as illustrated in FIG. 3 when prompting the user for input. In this case, the controller 10 causes the output interface 40 to display the display screen as illustrated in FIG. 3. Further, the information processing apparatus 1 according to the embodiment may store various data for displaying the display screen in the memory 20 in advance. Alternatively, the information processing apparatus 1 according to the embodiment may receive various data for displaying the display screen from the external server 100 via the network N using the communication interface 50.

FIG. 3 is a diagram illustrating an example of a condition input screen for each subsidiary company.

As illustrated in a "Conditions" section in FIG. 3, the information processing apparatus 1 according to the embodiment can prompt the user to input a plurality of conditions of, for example, the subsidiary company A such as an energy saving effect as an individual energy saving target, an investment payback period, and a BCP. While this screen is displayed, the user can input various conditions from the input interface 30.

As illustrated in the "Conditions" section in FIG. 3, also, the information processing apparatus 1 according to the embodiment can prompt the user to select one of the plurality of conditions as a prioritized item. FIG. 3 illustrates a state in which "Investment Payback Period" is selected as the prioritized item, from among a plurality of conditions. Here, that is, the user prioritizes the investment payback period over other the conditions such as the energy saving effect and the BCP included in the plurality of conditions.

As illustrated in "When the distributed power source is fixed" section in FIG. 3, further, the information processing apparatus 1 can prompt the user to select whether to set a range of value such as outputs by the distributed power source or to set a fixed value. Hereinafter, a case in which the distributed power source includes three systems: the solar cell, the storage battery, and the fuel cell will be described. However, the distributed power source is not limited to these three systems, and any one of them may be omitted or another power generation system or the like may be added. FIG. 3 illustrates a state in which a range of value, rather than a fixed value, is set for each of the solar cell, the storage battery, and the fuel cell.

A case in which a user inputs various conditions for the subsidiary company A has been described with reference to the example illustrated in FIG. 3. Here, for example, the same user may input various conditions for the subsidiary company B and/or the subsidiary company C. Alternatively, another user may input various conditions for the subsidiary company B, and still another user may input various conditions for the subsidiary C.

It is assumed that, after these parameters are input by the user, an object "Calculate" button displayed at a lower right in FIG. 3 is tapped (or clicked, etc.) by the user. In this case, the information processing apparatus 1 starts a predetermined calculation and displays a result on the output interface 40.

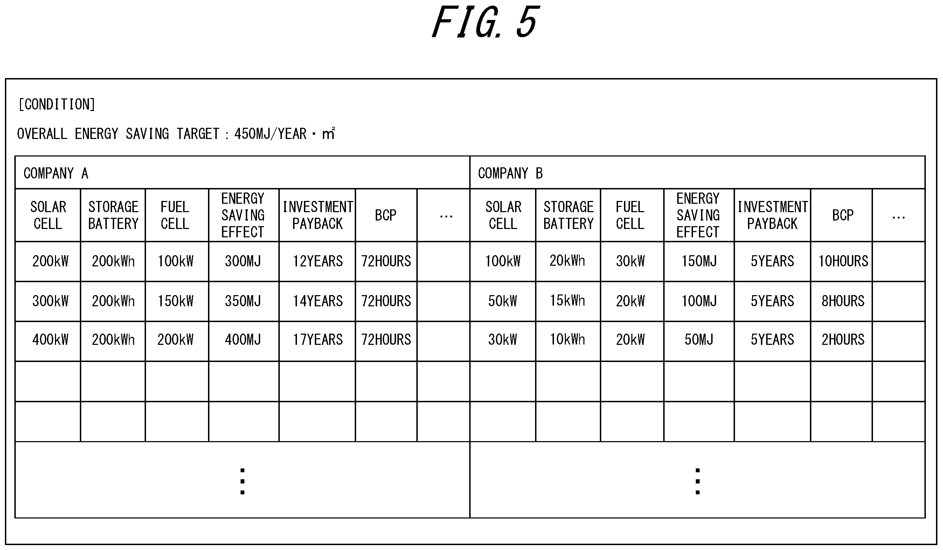

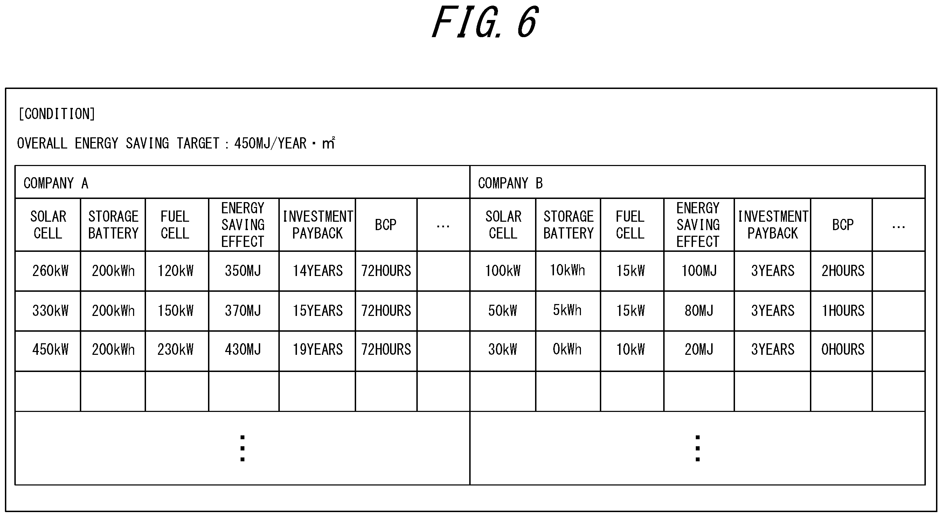

For example, upon detection of the input in respect to the "Calculate" button illustrated at the lower right in FIG. 3, the controller 10 may output an output screen as illustrated in FIG. 5 or FIG. 6 to the output interface 40. FIG. 5 and FIG. 6 illustrate respective specifications of the distributed power sources as an example configuration of the energy equipment that satisfies the various conditions input in FIG. 3. That is, when the user inputs various conditions on the input screen illustrated in FIG. 3, the configuration of the distributed power source that satisfies the various conditions is presented as illustrated in FIG. 5 or FIG. 6. As a result, the user can easily recognize, for example, configurations of the distributed power sources that can be introduced in the subsidiary company A and can satisfy the various conditions as the entire group company and also as the subsidiary company A.

FIG. 4 is a diagram illustrating an example of information collected by the information processing apparatus 1. As illustrated in FIG. 4, in the information processing apparatus 1, for example, the overall energy saving target may be input as a condition of the parent company. This input may be performed by a user who is an employee of the parent company or a user who is an employee of any of the subsidiary companies. As illustrated in FIG. 4, further, in the information processing apparatus 1, a plurality of conditions as illustrated in FIG. 3 may be input as, for example, conditions of the subsidiary company. FIG. 4 illustrates a state in which a plurality of conditions of each of the subsidiary company A and the subsidiary company B are input. As illustrated in FIG. 4, the company A has the BCP as its prioritized item from among the plurality of conditions, and the company B has the investment payback period as its prioritized item from among the plurality of conditions. As described above, regardless of different prioritized items between the subsidiary companies, the information processing apparatus 1 according to the embodiment can present the energy equipment that satisfies the respective conditions in consideration of the respective prioritized items of the subsidiary companies. In the information processing apparatus 1, because all the conditions for each company as illustrated in FIG. 4 are satisfied as the entire group company, the energy equipment that satisfies the various conditions can be presented to each subsidiary company.

Here, the relationship between the plurality of conditions described above and the energy equipment will be explained. Generally, first, as a scale of the energy equipment increases, the energy saving effect tends to increase. Here, the scale of the energy equipment may include, for example, from among the distributed power sources, electric power (electric energy) generated by the solar cell, electric power (electric energy) generated by the fuel cell, a capacity of the storage battery, an output (electric energy) of the storage battery, or the like. Also, as the scale of the energy equipment increases, the BCP tends to increase. Further, as the scale of the energy equipment increases, the cost tends to increase, whereby the investment payback period also tends to increase.

As the scales of the solar cell and the fuel cell equipment increase, the energy saving effect also increases. In this case, on the other hand, a surplus of power generation (a degree of excess supply with respect to a power load of a building) can become large. For this reason, an economic effect can constantly converge, and the investment payback period tends to become long. As the capacity and the output of the storage battery increase, the BCP also increases, and the payback period tends to increase. In the information processing apparatus 1 according to the embodiment, the controller 10 may determine the energy equipment that satisfies a plurality of conditions, based on various data as described above.

FIG. 5 is a diagram illustrating an example combination of the energy equipment presented by the information processing apparatus 1. The information processing apparatus 1 may read out the combination of the energy equipment that satisfies the conditions from the memory 20, based on the input of the conditions described above, and output the combination as an output screen to the output interface 40.

As illustrated in FIG. 5, the information processing apparatus 1 determines a combination of the energy equipment that satisfies the overall energy saving target as well as the conditions of each subsidiary company and outputs the combination to the output interface 40. In a "Condition" section in FIG. 5, the overall energy saving target that has been input is displayed. As illustrated in FIG. 5, further, combinations of the energy equipment that satisfy the respective conditions are displayed for each of the subsidiary company A and the subsidiary company B.

A "Company A" section in FIG. 5 displays three example combinations of the energy equipment that satisfy the condition. As illustrated in the "Company A" section in FIG. 5, a combination of the solar cell of 200 kW, the storage battery of 200 kW, and the fuel cell of 100 kW satisfies the condition of the company A. As illustrated in the "Company A" section in FIG. 5, a combination of the solar cell of 300 kW, the storage battery of 200 kWh, and the fuel cell of 150 kW also satisfies the condition of the company A. As illustrated in the "Company A" section in FIG. 5, further, a combination of the solar cell of 400 kW, the storage battery of 200 kWh, and the fuel cell of 200 kW also satisfies the condition of the company A. As illustrated in FIG. 5, however, the energy saving effect and the investment payback period differ between each combination that satisfies the condition. As illustrated in the "Company A" section in FIG. 4, on the other hand, the subsidiary company A sets the BCP as the prioritized item. As illustrated in the "Company A" section in FIG. 5, thus, all BCPs of the company A are fixed to 72 hours. To indicate that the BCP is set to be the prioritized item of the subsidiary company A, in the "Company A" section in FIG. 5, for example, a column of the BCP and/or numerical values therein may be displayed in a display mode that distinguishes it from others, such as in a different color from others.

A "Company B" section in FIG. 5 illustrates three example combinations of the energy equipment that satisfy the condition. As illustrated in the "Company B" section in FIG. 5, a combination of the solar cell of 100 kW, the storage battery of 20 kW, and the fuel cell of 30 kW satisfies the condition of the company B. As illustrated in the "Company B" section in FIG. 5, a combination of the solar cell of 50 kW, the storage battery of 15 kWh, and the fuel cell of 20 kW also satisfies the condition of the company B. As illustrated in the "Company B" section in FIG. 5, further, a combination of the solar cell of 30 kW, the storage battery of 10 kWh, and the fuel cell of 20 kW also satisfies the condition of the company B. As illustrated in FIG. 5, however, each of the combinations that satisfies the condition has different energy saving effect and BCP. As illustrated in the "Company B" section in FIG. 4, on the other hand, the subsidiary company B sets the investment payback period as the prioritized item. As illustrated in the "Company B" section in FIG. 5, thus, all of the investment payback periods of the company B are fixed to 5 years. To indicate that the investment payback period is set to be the prioritized item of the subsidiary company B, in the "Company B" section in FIG. 5, for example, a column of the investment payback period and/or numerical values therein may be displayed in a display mode that distinguishes it from others, such as in a different color from others.

As illustrated in FIG. 5, the information processing apparatus 1 may present a plurality of combinations of the energy equipment that satisfy the overall energy saving achievement target and the conditions (further prioritized items) of the respective companies. To output the information as illustrated in FIG. 5, the controller 10 may calculate each numerical value by variously changing the combination of the energy equipment within, for example, a preset range. The controller 10 may calculate a charge and discharge pattern of the storage battery, a power generation pattern of the fuel cell, a power generation pattern of the solar cell, a power purchase pattern from a grid, and the like for each combination of the energy equipment. The controller 10 may calculate the energy saving effect, the payback period, the BCP, and the like for each combination of the energy equipment, based on the patterns.

Next, a case in which a condition having been input is changed later will be described.

In the "Company B" section in FIG. 5, as described above, the investment payback period of the company B is set to year. This is because, for example, in the "Company B" section in FIG. 4, "within 5 years" is input as the payback period. In this state, for example, to change the condition of company B, it is assumed that the user displays the input screen of the conditions as illustrated in FIG. 3 and changes "within 5 years" to "within 3 years" as the investment payback period. When the value input by the user is changed as described above, the controller 10 performs recalculation based on the changed value, calculates a new combination of the energy equipment, and outputs the new combination.

FIG. 6 is a diagram illustrating an example of a new combination of the energy equipment presented by the information processing apparatus 1. The information processing apparatus 1 may read out the combination of the energy equipment that satisfies the changed condition from the memory 20, based on the change of the condition described above, and output the combination as the output screen to the output interface 40.

The "Company B" section in FIG. 6 displays three example combinations of the energy equipment that satisfy the changed conditions. As can be seen from a comparison with FIG. 5, in the "Company B" section in FIG. 6 the investment payback period has been changed from 5 years to 3 years. As illustrated in the "Company B" section in FIG. 4, the subsidiary company B sets the investment payback period as the prioritized item. As indicated in the "Company B" section in FIG. 6, thus, all of the investment payback periods of the company B are fixed to 3 years. To indicate the change in the investment payback period of the subsidiary company B, in the "Company B" section in FIG. 6, for example, the column of the investment payback period and/or the numerical values therein may be displayed in a display mode that distinguishes it from the column of the investment payback period and/or the numerical values therein in the "Company B" section in FIG. 5.

As illustrated in the "Company B" section in FIG. 6, also, when the condition of the investment payback period of the company B is changed, other conditions may be affected to achieve the investment payback period. For example, as can be seen from the comparison with FIG. 5, in the "Company B" section in FIG. 6 the combinations of the storage battery and the fuel cell are also changed in accordance with the change in the investment payback period. Further, as can be seen from the comparison with FIG. 5, in the "Company B" section in FIG. 6 the energy saving effects and the BCPs are also changed in accordance with the change in the investment payback period.

### As illustrated in the "Company B" section in FIG. 6, further, a change in any one of the conditions of the company B may affect the conditions of other companies to achieve the overall energy saving target. For example, as can be seen from the comparison with FIG. 5, the combinations of the solar cell and the fuel cell are also changed in the "Company A" section in FIG. 6, in accordance with the change in the condition of the "Company B". Further, as can be seen from the comparison with FIG. 5, the energy saving effects and the investment payback periods are also changed in the "Company A" section in FIG. 6, in accordance with the change in the condition of the "Company B". On the other hand, the BCPs are not changed in the "Company A" section in FIG. 6. This is because, for example, the BCP is set to be the prioritized item in the "Company A" section in FIG. 4.

As described above, when, for example, the condition of the subsidiary company B is changed and whereby there is an influence such as a reduction in the energy saving effect that can be obtained, a combination of the energy equipment of the subsidiary company A is recalculated to satisfy the overall energy saving target. Then, the controller 10 may update information with a recalculated combination of the energy equipment and output the information from the output interface 40. According to the information processing apparatus 1 of the embodiment, the configuration of the energy equipment that satisfies new conditions in accordance with a change of some conditions may be presented to the user.

The display screens illustrated in FIG. 5 and FIG. 6 may be displayed based on, for example, an input in respect to the "Calculate" button illustrated at the lower right in FIG. 3.

Next, more detailed settings to be performed in the information processing apparatus 1 will be described.

Upon detection of an input in respect to a "Detailed Settings" object at a lower left in the input screen illustrated in FIG. 3 output to the output interface 40, the information processing apparatus 1 may display a screen that allows an input of information regarding detailed settings.

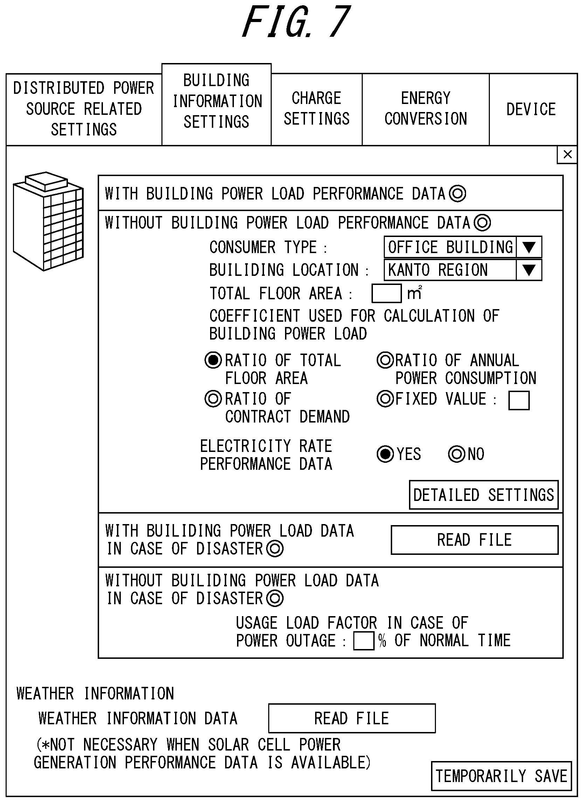

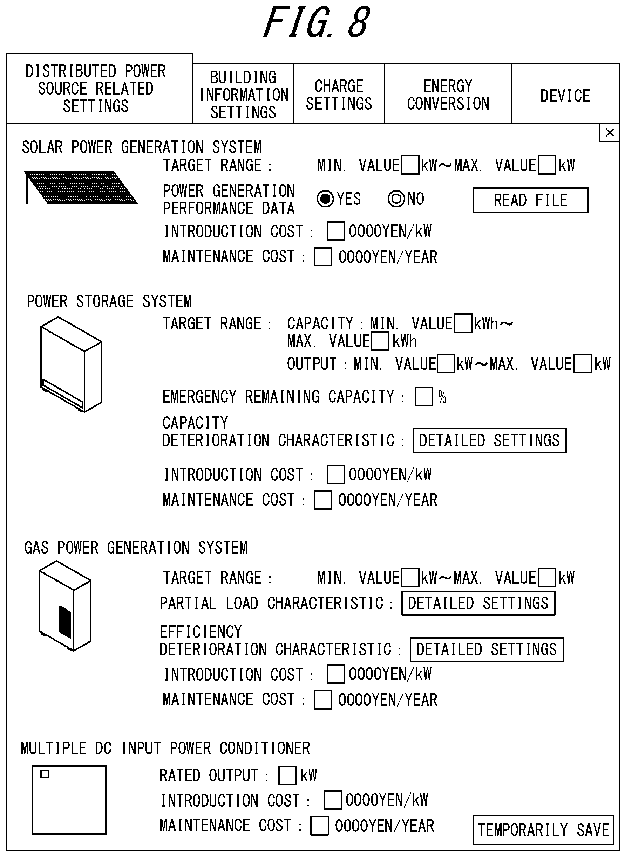

FIG. 7 and FIG. 8 are diagrams illustrating example screens of detailed settings displayed based on an input in respect to the "Detailed Settings" illustrated in FIG. 3. As illustrated in FIG. 7 and FIG. 8, the controller 10 may output one of the screens illustrated in FIG. 7 and FIG. 8, based on an input for selecting a tab located at a top of the screen.

FIG. 7 is a diagram illustrating the example screen for setting building information in detail (building information setting). The controller 10 may display a screen that prompts the user to input the presence or absence of performance data of a power load of the building, as illustrated in FIG. 7. For example, in a case in which there is performance data of the power load of the building, the controller 10 may prompt the user to input such data. Further, the controller 10 may acquire such data from the communication interface 50 by communicating with the external server 100 via the network N.

On the other hand, when there is no performance data of the power load of the building, the controller 10 may display a screen that prompts the user to input various information as illustrated in FIG. 7. For example, in the example illustrated in FIG. 7, the user may input or select a type of consumer, an area where the building is located, a total floor area, a coefficient used for calculating a power load of the building, the presence or absence of electricity rate performance data, and the like.

Here, when there is no performance data of the power load of the building, the controller 10 may calculate a correction value data using representative value data prepared in advance. For example, the representative value data may be prepared in units of 30 minutes, and a value obtained by multiplying the representative value data by the total floor area may be used as the correction value data. Here, a ratio of the total floor area may be a ratio of a value input as the total floor area to the total floor area prepared as the representative value data. As a specific example of the representative value data, for example, an "office" folder may be prepared, and data of a typical load pattern of each office located nationwide may be collected and stored in the "office" folder. Further, for example, a "store" folder may be prepared, and data of a typical load pattern of each store located nationwide may be collected and stored in the "store" folder.

As illustrated in FIG. 7, also, the controller 10 may display a screen that prompts the user to input the presence or absence of building power load data in case of a disaster. For example, in a case in which there is the building power load data in case of a disaster, the controller 10 may start reading a data file, based on an input in respect to an object to read the data file. On the other hand, in a case in which there is not the building power load data in case of a disaster, the controller 10 may prompt the user to input a usage load factor in case of a power outage.

As illustrated in FIG. 7, further, in a case in which there is weather information data, the controller 10 may start reading a data file, based on an input in respect to the object to read the data file.

Example screens for setting the building information in detail from the viewpoint of the power load have been described above. In one embodiment, the controller 10 may display a screen for setting detailed building information from the viewpoint of a heat load, rather than or together with the viewpoint of the power load, to prompt the user to input.

Upon detection of an input in respect to a "Temporarily Save" object in the lower right in FIG. 7, the controller 10 may store the information on the screen illustrated in FIG. 7 in the memory 20.

FIG. 8 is a diagram illustrating the example screen (a distributed power source related settings screen) for making settings associated with the distributed power source. As illustrated in FIG. 8, the controller 10 may display a screen that prompts the user to input information regarding various distributed power sources that the user is considering to introduce. Further, data based on the distributed power source already introduced by each subsidiary company or the like may be input on the screen of the distributed power source related settings screen.

As illustrated in FIG. 8, for example, the controller 10 may display a screen that prompts the user to input a minimum value and a maximum value as information for defining a target range of an output of a solar power generation system (the solar cell). Further, the controller 10 may display a screen that prompts the user to input the presence or absence of power generation performance data of the solar power generation system. For example, in a case in which there is the power generation performance data of the solar power generation system, the controller 10 may start reading a data file thereof, based on an input in respect to an object to read the file. Further, the controller 10 may display a screen that prompts the user to input the cost for introducing the solar power generation system and the cost for maintaining the solar power generation system.

As illustrated in FIG. 8, the controller 10 may display a screen for prompting the user to input a minimum value and a maximum value as information for defining target ranges of a capacity and an output of a power storage system (the storage battery). In a case in which there is information regarding an emergency remaining capacity of the power storage system, the controller 10 may display a screen prompting the user to input the information. The controller 10 may display a "Detailed Settings" object that allows detailed settings a capacity deterioration characteristic of the power storage system and detect a user input in respect to the object. Upon detection of the user input in respect to the "Detailed Settings" object, the controller 10 may set the deterioration characteristic of the power storage system, based on, for example, deterioration data of the power storage system acquired on a real-time basis. Further, the controller 10 may display a screen that prompts the user to input the cost for introducing the power storage system and the cost for maintaining the power storage system.

As illustrated in FIG. 8, the controller 10 may display a screen for prompting the user to input a minimum value and a maximum value as information defining a target range of an output of the gas power generation system (the fuel cell). In a case in which there is information regarding a partial load characteristic of the gas power generation system, the controller 10 may display a screen that prompts the user to input the information. Further, the controller 10 may display a "Detailed Settings" object that allows detailed settings of an efficiency deterioration characteristic of the gas power generation system and detect a user input in respect to the object. Upon detection of a user input in respect to the "Detailed Settings" object, the controller 10 may set the deterioration characteristics of the gas power generation system, based on, for example, deterioration data of the gas power generation system acquired on a real-time basis. Further, the controller 10 may display a screen that prompts the user to input the cost for introducing the gas power generation system and the cost for maintaining the gas power generation system.

As illustrated in FIG. 8, further, the controller 10 may display a screen that prompts the user to input information regarding a power control apparatus. Here, the power control apparatus may be, for example, a power control apparatus capable of inputting outputs of multiple DC power sources. For example, the controller 10 may display a screen that prompts the user to input a rated output of the power control apparatus. Further, the controller 10 may display a screen that prompts the user to input the cost for introducing the power control apparatus and the cost for maintaining the power control apparatus.

Upon detection of an input in respect to a " Temporarily Save" object in the lower right in FIG. 8, the controller 10 may store the information on the screen illustrated in FIG. 8 in the memory 20.

By inputting detailed information as illustrated in FIG. 7 and/or FIG. 8, the information processing apparatus 1 can present the combination of the energy equipment to the user, based on more accurate information. As illustrated in FIG. 7 and FIG. 8, further, the controller 10 may display a screen for charge settings, energy conversion, apparatuses, or the like, in addition to the distributed power source related settings screen and a building information setting screen and prompt the user to input various settings.

Next, a detailed graph output by the information processing apparatus 1 according to the embodiment will be described.

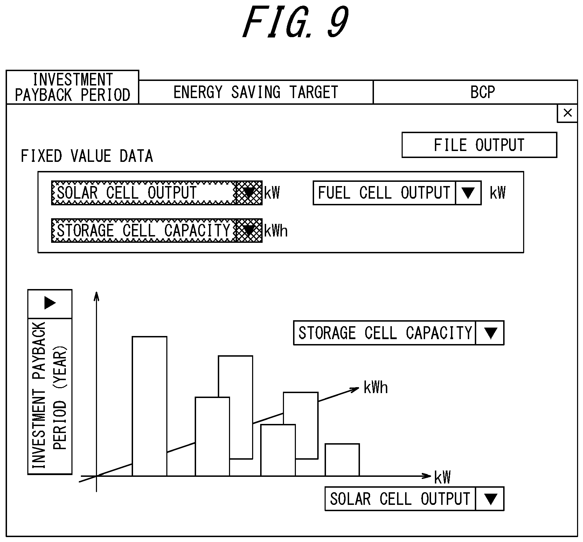

FIG. 9 is a diagram illustrating an example of a detailed graph output by the information processing apparatus 1 according to the embodiment. FIG. 9 illustrates a screen displaying more detailed information regarding the combination of the energy equipment presented to each subsidiary company. A tab located at the top end in FIG. 9 indicates that this screen displays information particularly associated with the payback period. In addition, the information processing apparatus 1 may output detailed a graph of the energy saving effect and the BCP. The graph illustrated in FIG. 9 may be a screen displayed on the output interface 40 in response to, for example, an input in respect to a "Display Details" object displayed on the output interface 40. The "Display Details" object may be displayed at any position in the screen illustrated in, for example, FIG. 5 or FIG. 6.

A "Fixed Value Data" section in FIG. 9 illustrates a display for prompting the user to select a parameter to be set as a fixed value and a parameter to be set as a variable value in a graph illustrated therebelow. That is, in the "Fixed Value Data" section in FIG. 9 the user can select and set a parameter that is fixed and not to be output to the graph. In an example of the "Fixed Value Data" section illustrated in FIG. 9, a "Fuel Cell Output" is set to be a fixed value. That is, in the graph illustrated in FIG. 9, the "Fuel Cell Output" is a fixed value and thus its change is not displayed. On the other hand, because a "Solar Cell Output" and a "Storage Battery Capacity" are not fixed values in the example illustrated in FIG. 9, they are grayed out and cannot be selected. This is because the "Solar Cell Output" and the "Storage Battery Capacity" are selected as axes indicating a change in the graph illustrated in FIG. 9.

A vertical axis in the graph illustrated in FIG. 9 indicates the investment payback period. Also, a horizontal axis illustrated in the graph illustrated in FIG. 9 is selected to indicate the solar cell output. Because the solar cell output is treated as a variable, the solar cell output cannot be selected in the "Fixed Value Data" section in FIG. 9. Here, for example, when the item indicated by the horizontal axis in the graph of FIG. 9 is changed by a user input, the display of the graph illustrated in FIG. 9 is also changed.

The graph illustrated in FIG. 9 is displayed in a three-dimensional manner using three axes. In the graph illustrated in FIG. 9, an axis extending in a depth direction is selected to indicate the storage battery capacity. Thus, because the storage battery capacity is treated as a variable, the storage battery capacity cannot be selected in the "Fixed Value Data" section in FIG. 9. Here, for example, when the item indicated by the axis extending in the depth direction in the graph of FIG. 9 is changed by a user input, the display of the graph illustrated in FIG. 9 is also changed.

The graph illustrated in FIG. 9 displays a result satisfying the conditions that have been input in FIG. 3. Thus, the user can easily obtain detailed information regarding the energy equipment that satisfies the conditions, by looking at the graph illustrated in FIG. 9.

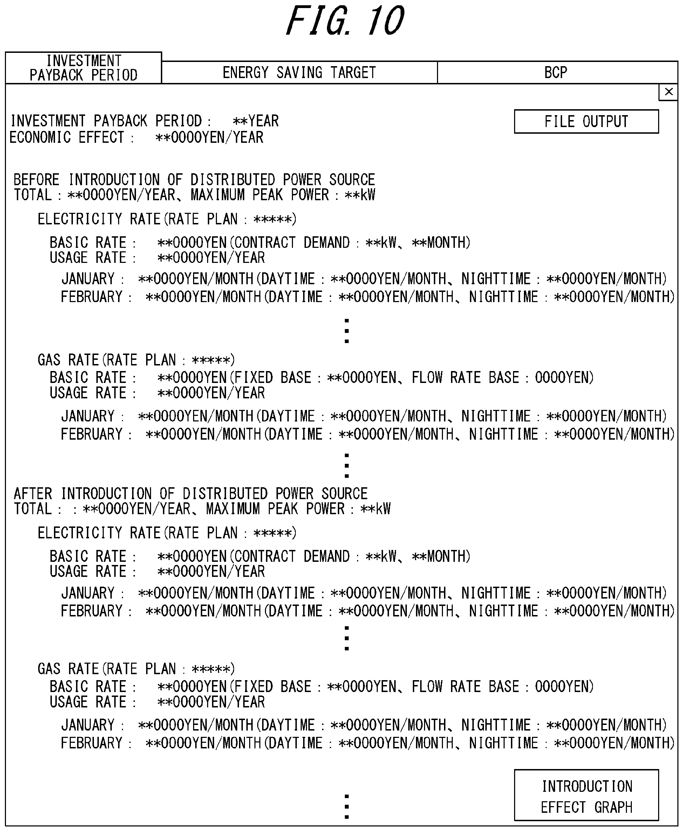

The controller 10 may display a screen as illustrated in FIG. 10 in addition to the graph illustrated in FIG. 9. FIG. 10 illustrates an example screen displaying a detailed result of the graph illustrated in FIG. 9.

As illustrated in FIG. 10, the controller 10 may display, in addition to an economic effect per year when the investment payback period is set to a predetermined period, a clear indication of a difference between before and after the introduction of the distributed power source. As illustrated in the example in FIG. 10, the controller 10 may list the electricity rates and gas charges before and after the introduction of the energy equipment (the distributed power source) that satisfies the conditions. As a result, the user can easily compare and understand merits in cost of introducing the energy equipment (the distributed power source) that satisfies the conditions.

In one embodiment, the controller 10 may display a screen as illustrated in FIG. 10 on the output interface 40 in response to an input in respect to, for example, the "Display Details" object. The "Display Details" object may be displayed at any location in the screen as illustrated in, for example, FIG. 5 or FIG. 6. In one embodiment, also, the controller 10 may display the graph illustrated in FIG. 9 and the screen illustrated in FIG. 10 on the output interface 40 in a manner in which they can be switched or transitioned from each other. In one embodiment, further, the controller 10 may display the graph illustrated in FIG. 9 and the screen illustrated in FIG. 10 together in the same screen.

In one embodiment, further, the controller 10 may display a screen of a graph indicating an effect of introduction of the energy equipment (the distributed power source) that satisfies the conditions in response to, for example, an input in respect to an "Introduction Effect Graph" object displayed in the lower right in FIG. 10.

For example, the controller 10 may display a graph of a chronological change in each parameter in a case in which the energy equipment (distributed power source) that satisfies the conditions is introduced. The parameters displayed in the graph may be, for example, a load of the building, purchased electric power, the output of the solar power generation, the output of the gas power generation, the electric power to be charged in a rechargeable battery, the electric power to be discharged from the rechargeable battery, gas consumption by the gas power generation system, SOC (State of Charge) of the rechargeable battery, or the like. Further, the controller 10 may display information such as an electric power usage status, a gas usage status, a generation amount and a consumption amount of energy resulting from energy saving, and a CO₂ emission amount, as appropriate.

In one embodiment, the controller 10 may display various detailed information regarding a bar graph in response to, for example, an input to an object at any position on bars illustrated in the bar graph of FIG. 9.

Next, an operation of the information processing apparatus 1 according to the embodiment will be described.

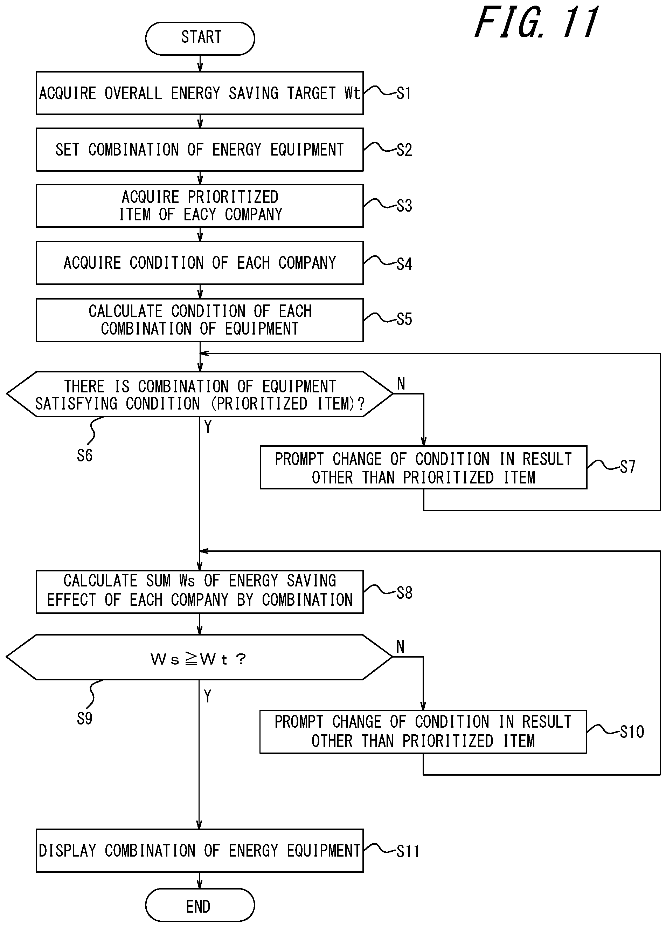

FIG. 11 is a flowchart illustrating the operation of the information processing apparatus 1 according to the first embodiment. The processing illustrated in FIG. 11 may start in a state in which, for example, at each of the parent company and/or the subsidiary company the user performs an input on the input screen as illustrated in FIG. 3 and the information illustrated in FIG. 4 is stored in, for example, the memory 20. The processing illustrated in FIG. 11 may start in a state in which, for example, at each of the parent company and/or the subsidiary company the user performs an input on the input screen as illustrated in FIG. 3 and the information illustrated in FIG. 4 is collected by, for example, the external server 100.

When the operation illustrated in FIG. 11 starts, the controller 10 acquires an overall energy saving target Wt (step S1). In step S1, the controller 10 may acquire information regarding the overall energy saving target as illustrated in the "Condition" section illustrated in FIG. 4, by way of example. In this case, in a case in which the information regarding the overall energy saving target is stored in the memory 20, the controller 10 may read out the information from the memory 20. On the other hand, in a case in which the information regarding the overall energy saving target is stored in, for example, a memory of an information processing apparatus of another subsidiary company or the parent company, the controller 10 may acquire the information via the communication interface 50.

When the overall energy saving target is acquired in step S1, the controller 10 sets the combination of the energy equipment (step S2). In step S2, the controller 10 may read out and set all or some of combination patterns that can be considered to be combinations of the distributed power sources serving as the energy equipment, as a range of calculation by the controller 10. Here, the combination patterns of the distributed power sources serving as the energy equipment may be a combination in which the outputs by the distributed power sources such as the solar cell, the storage battery, and the fuel cell are different from one another as illustrated in FIG. 5, by way of example. In step S2, the controller 10 may read out the information regarding the combination of the distributed power sources serving as the energy equipment from the memory 20 or from another information processing apparatus such as the external server 100 via the communication interface 50 and set the combination. Hereinafter, the information acquired by the controller 10 may be information to be acquired by reading out from the memory 20 or from another information processing apparatus such as the external server 100 via the communication interface 50, as appropriate.

When the combination of the energy equipment is set in step S2, the controller 10 acquires the prioritized item of each subsidiary company (step S3). In step S3, the controller 10 may read out and acquire information regarding the prioritized item of each subsidiary company as illustrated in FIG. 4 as the prioritized item selected in a "Prioritized Item" section illustrated in FIG. 3 by way of example.

When the respective prioritized items of the companies are acquired in step S3, the controller 10 acquires a plurality of conditions of each subsidiary company (step S4). In step S4, the controller 10 may acquire information such as, for example, the investment payback period, the energy saving target, and the BCP as the conditions of each company, as described above. In step S4, the controller 10 may acquire the information regarding the respective conditions of the subsidiary companies as illustrated in FIG. 4 as the items input in the "Conditions" section illustrated in FIG. 3 by way of example, by reading out the information.

When the respective conditions of the companies are acquired in step S4, the controller 10 calculates conditions for each combination of the energy equipment (step S5). That is, in step S5 the controller 10 may calculate the energy saving effect, the investment payback period, and the BCP for each combination of the energy equipment, as illustrated in FIG. 5.

After the conditions for each combination of equipment are calculated in step S5, the controller 10 determines whether there is a combination of the energy equipment that satisfies the conditions in consideration of prioritized items (step S6).

In a case in which there is no combination of the energy equipment that satisfies the conditions in step S6, the controller 10 may display an indication that prompts the user to change a condition other than the prioritized item (step S7). In step S7, further, the controller 10 detects a user input from the input interface 30 to change a condition. When the condition in the results other than the prioritized item is changed in step S7, the controller 10 returns to step S6 and once again determines whether there is a combination of the energy equipment that satisfies the conditions in consideration of the prioritized item. The processing from step S5 to step S7 may be performed, for example, for each subsidiary company.

On the other hand, in a case in which there is a combination of the energy equipment that satisfies the conditions in step S6, the controller 10 calculates a sum Ws of the energy saving effect of each company for the combination (step S8). In step S8, that is, the controller 10 calculates the sum Ws of the energy saving effect of each company for the combination of the energy equipment that satisfies the conditions in consideration of the prioritized item.

After the sum Ws is calculated in step S8, the controller 10 determines whether the sum Ws is equal to or greater than the overall energy saving target Wt acquired in step S1 (step S9). In a case in which the sum Ws is not equal to or greater than the overall energy saving target Wt in step S9, the controller 10 may display a display that prompts the user to change a condition other than the prioritized item in the result on the output interface 40 (step S10). Further, in step S10, the controller 10 detects a user input to change a condition from the input interface 30. When the condition in the results other than the prioritized item is changed in step S10, the controller 10 returns to step S8 and recalculates the sum Ws of the energy saving effect of each company for the combination. The process of step S10 may also be performed, for example, for each subsidiary company.

On the other hand, in a case in which the sum Ws is equal to or greater than the overall energy saving target Wt in step S9, the controller 10 displays the combination of the energy equipment on the output interface 40 (step S11). In step S11, that is, the controller 10 displays the combination of the energy equipment that satisfies the conditions in consideration of the overall energy saving target and the prioritized item of each company. In step S11, further, in a case in which there are a plurality of combinations of the energy equipment that satisfy the conditions in consideration of the overall energy saving target and the prioritized item of each company, the controller 10 may display all of the combinations. In step S11, the controller 10 may display a display on the output interface 40 as illustrated in FIG. 5, by way of example.

As described above, further, in a case in which the user changes a particular condition alone of a particular company, the controller 10 may return to step S3 or step S4 and continue the processing. That is, for example, when the investment payback period is changed from "within 5 years" to "within 3 years" in the "Company B" section in FIG. 4, the controller 10 may return to step S3 or step S4 and continue the processing. Thus, a new combination of the energy equipment is displayed.

In the processing illustrated in FIG. 11, the controller 10 may perform the calculation in consideration of, for example, electric power purchased from the commercial power grid (the grid). In the processing illustrated in FIG. 11, further, the controller 10 may perform the calculation in consideration of, for example, electric power consumed by loads in each subsidiary company. In the above description, the term "each company" may include a parent company and a subsidiary company or may include a subsidiary company alone. In the above description, also, the parent company may be treated as one subsidiary company, from the viewpoint of electric power.

As described above, the information processing apparatus 1 according to the first embodiment outputs information regarding a business revenue, based on various types of information. Here, for example, information regarding electric power supplied from the power generation apparatus, the power storage apparatus, and the commercial power grid is referred to as first information. For example, information regarding electric power stored in the power storage apparatus is referred to as second information. For example, information regarding electric power consumed by the load is referred to as third information. In this case, the information processing apparatus 1 according to the first embodiment outputs information regarding the business revenue, based on the first information, the second information, and the third information. That is, the information processing apparatus 1 may output information regarding a period for recovering the investment in electric power, based on the first information, the second information, and the third information.

Further, the information processing apparatus 1 according to the first embodiment may output at least one of the first information, the second information, and the third information, based on information regarding the period for recovering the investment in electric power (e.g., the investment payback period). The information processing apparatus 1 according to the first embodiment may output, based on a change in at least one of the first information, the second information, the third information, the information regarding the period for recovering the investment in electric power, information indicating a result of an influence accompanying the change. The first information may include at least one of an amount of electric energy generated by the power generation apparatus and cost associated with this electric energy, an amount of electric energy discharged by the power storage apparatus and cost associated with this electric energy, and an amount of electric energy purchased by the commercial power grid and cost associated with this electric energy.

According to the information processing apparatus 1 of the first embodiment, a configuration of a distributed power source that satisfies various conditions from the respective viewpoints of the parent company and the subsidiary company can be simulated. Thus, when a user newly introduces a distributed power source or changes a configuration of an existing distributed power source, the user can recognize an effect thereof from various viewpoints. According to the first embodiment, thus, the information processing apparatus 1 that contributes to the efficient use of electric power can be provided.

### Second Embodiment

Next, an information processing apparatus according to a second embodiment will be described.

The second embodiment can be implemented by an information processing apparatus configured in the same manner as the information processing apparatus 1 according to the first embodiment. Thus, a description of a configuration of the information processing apparatus according to the second embodiment will be omitted. The information processing apparatus according to the second embodiment is different from the information processing apparatus 1 according to the first embodiment, in terms of information stored in the memory 20, information received by the communication interface 50, and information input from the input interface 30. Based on such differences, the information processing apparatus according to the second embodiment differs from the information processing apparatus 1 according to the first embodiment, also in terms of information output from the output interface 40.

In recent years, for example, in local governments, a number of emerging electric power companies such as regional new electric power companies are starting up. For example, when starting an electric power business in a local government, it is not always easy to estimate the success or failure of the business, and it may take time to investigate the feasibility. In the information processing apparatus according to the second embodiment, thus, in response to a user input regarding the presence or absence and a scale of power generation equipment such as renewable energy and/or the energy equipment such as the storage battery, a change in a profit of the electric power business is output in a manner that facilitates understanding by the user. Thus, the user of the information processing apparatus according to the second embodiment can easily examine a business plan or an introduction of equipment and facilities. Further, the information processing apparatus according to the second embodiment can be easily handled by a user who does not have a specialized knowledge.

In the information processing apparatus according to the second embodiment, the controller 10 enables the user to input information as presented below by way of example from the input interface 30.
(1) Information regarding the energy equipment (the solar cell, the storage battery, a wind power generation, etc.);
(2) Information regarding a capacity of the energy equipment (i.e., a rated output (kW) of the power generation equipment, charge/discharge power (kW) and a capacity (kWh) of the storage battery, etc.);
(3) Information regarding an installation location of the energy equipment; and
(4) Demand power (kW) by the entire consumer to which electric power is sold in the electric power business, demand power (kWh), information regarding a location of a consumer, and consumer information (the consumer type).

In the information processing apparatus according to the second embodiment, the memory 20 may store the following information, by way of example:
(1) Information regarding the power generation equipment (information regarding a capacity, an amount of solar radiation, a power generation amount corresponding to weather conditions, the power generation pattern, etc. of the solar cell);
(2) Meteorological information (weather information and solar radiation information at a location indicated by location information, etc.);
(3) Consumer electric power pattern (an average load pattern for each consumer type); and
(4) Information regarding electricity price (information regarding the price of each power source (past information of JEPX (Japan Electric Power Exchange), or a contract rate, a meter rate, a consignment charge, etc. of a power company).

Next, an operation of the information processing apparatus according to the second embodiment will be described.

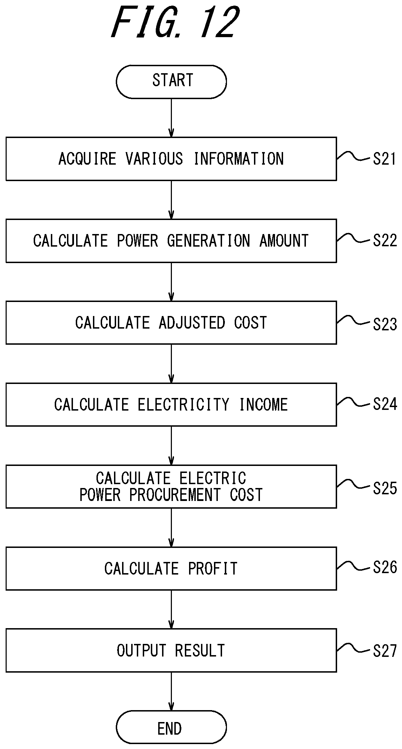

FIG. 12 is a flowchart illustrating the operation of the information processing apparatus according to the second embodiment. The processing illustrated in FIG. 12 may be started in a state in which the information as described above is input by the user at, for example, a power company such as a local government and the information as described above is stored in the memory 20. Further, the processing illustrated in FIG. 12 may be started in a state in which various information as described above is collected by, for example, the external server 100 of the power company such as the local government.

When the operation illustrated in FIG. 12 starts, the controller 10 acquires various information (step S21). In step S21, the controller 10 may acquire various information as described above input from, for example, the input interface 30. In step S21, the controller 10 may acquire various information as described above stored in, for example, the memory 20.

When various information is acquired in step S21, the controller 10 calculates the power generation amount (step S22). In step S22, the controller 10 calculates electric power (electric energy) generated by the energy equipment that has been input. In step S22, that is, the controller 10 calculates the amount of power generated by the power generation apparatus constituting the energy equipment and the power generation pattern. In this case, the amount of power generated by the power generation apparatus and the power generation pattern may be calculated based on a specification (a generator type, kWh, kWh, etc.) of the power generation apparatus that is information input from the input interface 30, and the installation location of the power generation apparatus. In this case, also, the amount of power generated by the power generation apparatus and the power generation pattern may be calculated based on a weather condition or the like at the installation location read from the memory 20. Further, the controller 10 may calculate a CO₂ reduction amount, as necessary, based on a CO₂ credit or the like.

When the power generation amount is calculated in step S22, the controller 10 calculates an adjusted cost (step S23). In step S23, the controller 10 may calculate, for example, an imbalance charge, a power cost reduction charge due to peak cut, a reduction charge due to a difference in an electricity price based on a time zone, or the like.

For example, in step S23 the controller 10 may calculate at least one of procured electric energy (an amount of electric energy), a sales amount of generated electric energy, the imbalance cost, a peak cut reduction cost, a power value difference reduction cost, and electric energy (an amount of electric energy) that needs to be procured. In this case, the controller 10 may perform the above calculation, based on the demand power (an amount of electric energy) input from the input interface 30, consumer information and, if available, input information regarding a specification of the storage battery. In this case, the controller 10 may perform the above calculation, based on consumer power pattern information corresponding to the consumer information stored in the memory 20. As described above, when the consumer electric power pattern is known, the accuracy of a result of the calculation can be improved by performing the calculation based on the consumer electric power pattern.

Here, procured power (electric energy) may be calculated from a difference between the demand power (electric energy) and generated power (electric energy). Similarly, a generated power sales amount is generated when generated power exceeds required power and may be calculated as a difference therebetween. Further, the imbalance cost may be calculated based on imbalance power and a unit price of the imbalance charge unit price. Here, the imbalance power represents electric power that can be reduced by adjusting the storage battery from a consumer electric power amount, an output of the storage battery, and the storage battery capacity. Further, the unit price of the imbalance charge may be acquired from the electricity price stored in the memory 20.

The peak cut reduction cost may be calculated based on the demand power, the electric power pattern, the power generation pattern, the power generation amount, and the specification of the storage battery. The power value difference reduction cost may be calculated based on the charge reduction obtained by the power value difference based on the time zone or the like. The power value difference based on the time zone or the like may be based on the specification of the storage battery, electricity price information stored in the memory 20, and the like. The imbalance cost, the peak cut reduction cost, and the power value difference reduction cost mentioned above are effects obtained by using the storage battery. Thus, a trade-off may occur in some cases, and the minimum cost may be calculated.

After the adjustment cost is calculated in step S23, the controller 10 calculates an electricity income (step S24). In step S24, the controller 10 may calculate a sales revenue of electricity with respect to the consumer and a sales revenue of generated electric power by the equipment. That is, in step S24 the controller 10 may calculate the electric power sales revenue obtained from electric power sold to a consumer, a revenue when generated power can be sold, and a revenue when the CO₂ reduction amount can be sold as the CO₂ credit or the like. In this case, the controller 10 may perform the above calculation, based on the power generation amount, the power generation pattern, procured electric power and its amount, and an amount of electric power that can be sold from the generated power. In this case, further, the controller 10 may perform the above calculation, based on the electricity price information stored in the memory 20.

When the electricity income is calculated in step S24, the controller 10 calculates an electric power procurement cost, that is, the cost for the procurement of electric power (step S25). In step S25, the controller 10 may calculate the cost for the procurement of electric power required to sell electric power to the consumer. In this case, the controller 10 may perform the calculation described above, based on a value obtained by subtracting the reduction charge due to the peak cut and the reduction charge due to the electric power value difference from the electricity price based on the electricity price information, procured electric power (electric energy), and the imbalance cost.

When the cost for the procurement of electric power is calculated in step S25, the controller 10 calculates the profit (step S26). In step S26, the controller 10 may calculate the profit of the business, based on the power procurement cost, the electricity income, equipment cost, and the like. In step S26, for example, the controller 10 may calculate the profit of the electric power business, based on the income from the sale of electric power, the income from the sale of generated electric power, and the power supply procurement cost. In this case, the controller 10 may calculate the profit of the electric power business, based on a depreciation amount of the equipment cost input from the input interface 30.

When the profit is calculated in step S26, the controller 10 outputs a result of the calculation of the profit (step S27). In step S27, the controller 10 may display the result of the calculation of the profit on the output interface 40.

In the information processing apparatus according to the second embodiment, as described above, the presence or absence and the scale of the power generation equipment such as renewable energy and/or the energy equipment such as storage battery are input by the user, so that a change in the profit of the electric power business can be output in a manner that can be easily understood by the user. Thus, the user can easily make a business plan or consider the introduction of equipment and facilities. Further, for example, a user who does not have specialized knowledge can easily handle the information processing apparatus according to the second embodiment. Accordingly, the second embodiment can also provide an information processing apparatus that contributes to efficient use of electric power.

### Example Variation of Second Embodiment

Next, an information processing apparatus according to an example variation of the second embodiment will be described. Hereinafter, the contents different from the description of the second embodiment described above will be mainly described. Thus, descriptions of the contents similar to those of the second embodiment described above will be simplified or omitted, as appropriate.

The information processing apparatus according to the example variation of the second embodiment stores map information and information regarding a proposed location for installing the energy equipment in the memory 20. Further, in the information processing apparatus according to the example variation of the second embodiment, the controller 10 adds a step of calculation regarding installation of the energy equipment to the flowchart illustrated in FIG. 12.

In the example variation of the second embodiment, the controller 10 may calculate a specification of the energy equipment (including the power storage equipment), based on information regarding the location of the consumer, electric power information of the consumer, and the map information that are input from the input interface 30. In this case, the controller 10 may perform the above calculation, based on a capacity of the energy equipment that can be installed in a location within, for example, a 5 km range, and a necessary specification estimated from the power demand. In the example variation of the second embodiment, thus, the user does not need to input the information of the energy equipment from the input interface 30.

In the example variation of the second embodiment, once the specification is calculated as described above, the controller 10 can thereafter perform the calculation regarding the business feasibility in the same manner as the flowchart illustrated in FIG. 12. In this way, the information processing apparatus according to the example variation of the second embodiment outputs the information regarding proposed energy equipment and a result of the business feasibility.

In the example variation of the second embodiment, for example, when the installation of the energy equipment is calculated based on the map information, in a case in which there is a database of the proposed location for installing the energy equipment registered in advance is available, the database may be used. In the example variation of the second embodiment, as described above, a result of the calculation regarding the business feasibility based on the customer information, the equipment information, and the like is output. In the example variation of the second embodiment, on the other hand, the required specification of the energy equipment may be calculated based on the consumer information and a profit target by repeating the same calculation process a plurality of times.

As described above, the information processing apparatus according to the example variation of the second embodiment can also output a change in the profit of the electric power business in a manner the user can easily understand. Thus, the user can easily make a business plan or consider the introduction of the equipment and facilities. Accordingly, the example variation of the second embodiment can also provide the information processing apparatus that contributes to the efficient use of electric power.

As described above, the information processing apparatus according to the second embodiment or the example variation of the second embodiment outputs information regarding the profit of the business, based on the first information, the second information, and the third information. Here, the first information, the second information, and the third information can be the same as those of the first embodiment described above. For example, the first information may be information regarding electric power supplied from the power generation apparatus, the power storage apparatus, and the commercial power grid. The second information may be information regarding electric power stored in the power storage apparatus. The third information may be information regarding electric power consumed by the load.

Further, the information processing apparatus according to the second embodiment or the example variation of the second embodiment may output information regarding the profit of the electric power business by the company located at the plurality of bases, based on the information of electric power at the plurality of bases. Also, the information processing apparatus according to the second embodiment or the example variation of the second embodiment may output information regarding the profit of the electric power business by the company that supervises the plurality of companies. Further, the information processing apparatus according to the second embodiment or the example variation of the second embodiment may output information regarding the feasibility of the electric power business, based on the information regarding the profit of the electric power business. Here, the first information may include information regarding the amount of electric power output from the power generation apparatus, the power storage apparatus, and the commercial power grid, and the cost for the amount of electric power.

Although the present disclosure has been described based on the figures and the embodiments, it should be appreciated that those who are skilled in the art may easily perform variations or alteration based on the present disclosure. Accordingly, such variations and alterations are to be included in the scope of the present disclosure. For example, the functions included in each of members, means or steps may be rearranged avoiding a logical inconsistency, such that a plurality of means and/or steps are combined, or one means and/or step is subdivided.

For example, the first embodiment and the second embodiment described above are not limited to be independently implemented as separate embodiments and may be implemented by appropriately combining at least a part of each of the embodiments.

The embodiments described above are not limited to be implemented as the information processing apparatus 1. For example, the embodiments described above may be implemented as an information processing method of an information processing apparatus such as the information processing apparatus 1. Further, for example, the embodiments described above may be implemented as a program of an information processing apparatus such as the information processing apparatus 1.

For example, an information processing method of an information processing apparatus according to an embodiment includes the following steps:
a step of acquiring first information regarding electric power supplied from a power generation apparatus, a power storage apparatus, and a commercial power grid, second information regarding electric power stored in the power storage apparatus, and third information regarding electric power consumed by a load; and
a step of outputting information regarding a business profit, based on the first information, the second information, and the third information.

Further, for example, a program of an information processing apparatus according to an embodiment causes a computer to perform the following steps:
a step of acquiring first information regarding electric power supplied from a power generation apparatus, a power storage apparatus, and a commercial power grid, second information regarding electric power stored in the power storage apparatus, and third information regarding electric power consumed by a load; and
a step of outputting information regarding a business profit, based on the first information, the second information, and the third information.

### REFERENCE SIGNS LIST

- 1: information processing apparatus
- 10: controller
- 20: memory
- 30: input interface
- 40: output interface
- 50: communication interface
- 100: external server

## Claims

1. An information processing apparatus comprising:
a controller configured to calculate an economic benefit resulting from energy saving attributed to a power generation apparatus and/or a power storage apparatus, based on first information regarding electric power supplied from the power generation apparatus and/or the power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus, and also calculate a period to be taken by the economic benefit to recover the cost of the power generation apparatus and/or the power storage apparatus,
wherein the controller is configured to output, based on an input of a predetermined period, information regarding a configuration of the power generation apparatus and/or the storage battery that can be realized by the cost to be recovered by the economic benefit in the predetermined period.

2. The information processing apparatus according to claim 1, wherein, based on a change in at least one of the first information, the second information, the third information, and the information regarding the period to be taken by the economic benefit to recover the cost of the power generation apparatus and/or the power storage apparatus, information indicating a result of an influence by the change is output.

3. The information processing apparatus according to claim 1 or 2, wherein, based on information regarding electric power at a plurality of bases, information regarding a configuration of the power generation apparatus and/or the power storage apparatus at the plurality of bases is output.

4. The information processing apparatus according to claim 3, wherein, based on the information regarding the electric power at the plurality of bases, information regarding a configuration of the power generation apparatus and/or the power storage apparatus at a base that supervises the plurality of bases is output.

5. An information processing method of an information processing apparatus, the information processing method comprising:
a step of acquiring first information regarding electric power supplied from a power generation apparatus and/or a power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus;
a step of calculating an economic benefit resulting from energy saving attributed to the power generation apparatus and/or the power storage apparatus, based on the first information, the second information, the third information, the information regarding the cost corresponding to the electric power, and the information regarding the cost of the power generation apparatus and/or the power storage apparatus, and also calculating a period to be taken by the economic benefit to recover the cost of the power generation apparatus and/or the power storage apparatus; and
a step of outputting, based on an input of a predetermined period, information regarding a configuration of the power generation apparatus and/or the storage battery that can be realized by the cost to be recovered by the economic benefit in the predetermined period.

6. A program of an information processing apparatus for causing a computer to perform:
a step of acquiring first information regarding electric power supplied from a power generation apparatus and/or a power storage apparatus at a predetermined base and electric power supplied to the predetermined base from a commercial power grid, second information regarding electric power stored in the power storage apparatus, third information regarding electric power consumed at the predetermined base, information regarding cost corresponding to the electric power, and information regarding cost of the power generation apparatus and/or the power storage apparatus;
a step of calculating an economic benefit resulting from energy saving attributed to the power generation apparatus and/or the power storage apparatus, based on the first information, the second information, the third information, the information regarding the cost corresponding to the electric power, and the information regarding the cost of the power generation apparatus and/or the power storage apparatus, and also calculating a period to be taken by the economic benefit to recover the cost of the power generation apparatus and/or the power storage apparatus; and
a step of outputting, based on an input of a predetermined period, information regarding a configuration of the power generation apparatus and/or the storage battery that can be realized by the cost to be recovered by the economic benefit in the predetermined period.
